# FASCICULE DE BREVET EUROPEEN

(11) **EP 0 527 684 B1**
(45) Date de publication et mention de la délivrance du brevet: **29.11.1995**
(21) Numéro de dépôt: 92402272.6
(22) Date de dépôt: 12.08.1992
(51) Int. Cl.: F02F 1/40, F01M 1/16, F16N 27/00

(54) **Culasse pour moteur à combustion interne**
Zylinderkopf für Brennkraftmaschine
Head cylinder for internal combustion engine

(30) Priorité: 13.08.1991 FR 9110268
(43) Date de publication de la demande: 17.02.1993
(73) Titulaire: REGIE NATIONALE DES USINES RENAULT S.A., 92109 Boulogne Billancourt (FR)
(72) Inventeur: Delaigue, Laurent, F-92130 Issy les Moulineaux (FR)

(56) Documents cités:
- EP-A- 0 175 300
- DE-A- 1 810 603
- FR-A- 1 387 465
- FR-A- 2 323 093
- US-A- 3 818 878
- PATENT ABSTRACTS OF JAPAN vol. 8, no. 152 (M-309)(1589) 14 Juillet 1984 & JP-A-59 049 308 (HONDA GIKEN KOGYO KK) 21 Mars 1984

## Description

La présente invention a pour objet une culasse pour moteur à combustion interne, de préférence multi-cylindres, équipant notamment les véhicules automobiles.

Une culasse pour moteur à combustion interne comprend traditionnellement des canalisations d'amenée d'huile permettant d'assurer la lubrification ou l'alimentation des pièces mobiles de la chaîne de distribution du moteur : arbre(s) à cames, culbuteurs, poussoirs ou analogues. Pour contrôler l'alimentation en huile sous pression de ces pièces mobiles et réguler les débits on utilise des ajutages rapportés, insérés dans les conduits.

La mise en place des ajutages à l'intérieur des conduits d'huile représente des difficultés de fabrication et de montage, difficultés qui peuvent être préjudiciables à la qualité et aux cadences de production des culasses.

Le US-A-3 818 878, correspondant au préambule de la revendication indépendante 1, décrit en outre une culasse où la conduite principale est formée par un premier perçage et intersecte perpendiculairement une conduite secondaire formée par des noyaux placés lors du moulage de la culasse. Un moyen distributeur est placé au droit de l'intersection et alimente avec un débit d'huile prédéterminé chacune desdites conduites secondaire; ce moyen distributeur nécessite une indéxation angulaire pour permettre, lors du montage à l'intérieur dudit premier perçage, de placer le moyen distributeur avec l'angle adéquat.
Le FR-A-2 323 093 décrit un circuit d'huile analogue, mais placé dans une caisson d'un bloc répartiteur.

Le but de l'invention est de pallier aux inconvénients précités, en proposant une culasse comportant un nombre restreint d'éléments rapportés nécessaires à la circulation d'huile, et des conduits d'amenée d'huile de forme simplifiée.

La culasse selon l'invention est définie dans revendication 1.

Selon une caractéristique de l'invention le corps cylindrique est logé à l'intérieur du premier perçage, monté serré de manière à étancher la conduite principale en direction de l'extérieur.

Selon une autre caractéristique de l'invention, le corps comporte un alésage longitudinal borgne, deux gorges périphériques et deux conduits calibrés dirigés radialement mettant en communication l'alésage et les gorges.

On comprendra mieux les buts, aspects et avantages de la présente invention, d'après la description donnée ci-après de l'art antérieur et d'un mode de réalisation de l'invention donné à titre d'exemple non limitatif, en se référant au dessin annexé, dans lequel :
la figure 1 est une vue partielle en coupe montrant une culasse suivant l'art antérieur ;
la figure 2 est une vue en coupe similaire à la figure 1, montrant une culasse suivant l'invention.

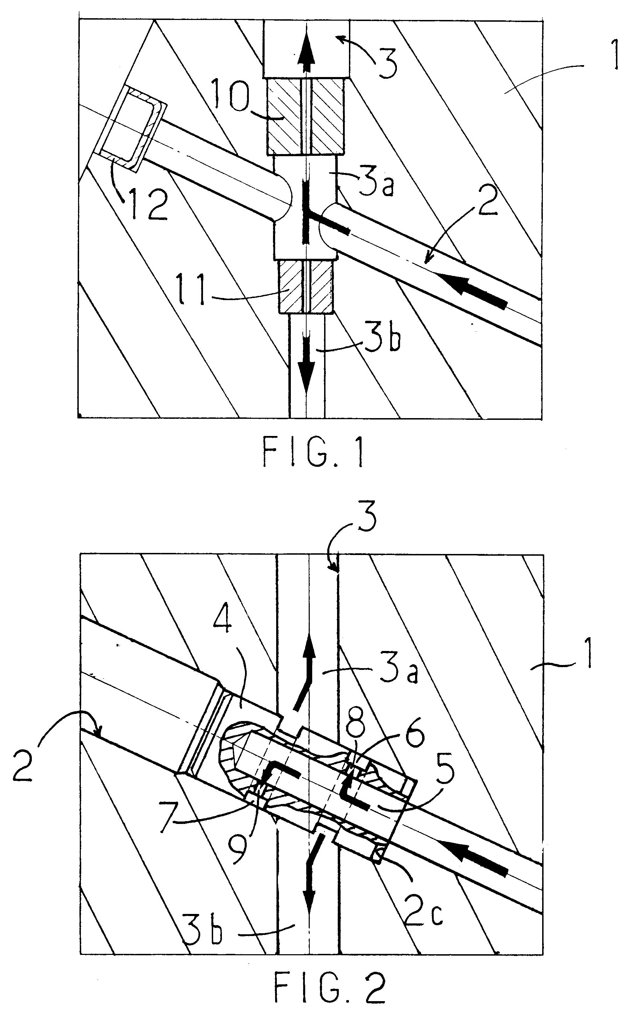

Conformément à la figure 1, on a représenté une culasse (1) pour moteur à combustion interne comportant une conduite principale d'amenée d'huile (2), qui s'étend en oblique par rapport à un plan horizontal, et deux conduites de dérivation coaxiales (3a,3b) qui partent verticalement de part et d'autre de la conduite principale (2). Les conduites de dérivation (3a,3b), sont destinées à alimenter chacune au moins une pièce mobile distincte de la chaîne de distribution non figurée, à cet effet elles sont classiquement munies d'un ajutage rapporté (10,11) formé par un tube percé d'un orifice calibré adapté aux caractéristiques de lubrification de la pièce mobile en regard. En plus des deux ajutages (10,11), un troisième élément rapporté est nécessaire à la mise en oeuvre du circuit d'huile, il s'agit d'un élément de fermeture (12) monté dans la conduite d'alimentation (2) qui obture de façon étanche le passage de l'huile en direction de l'extérieur.

Les deux perçages (2,3) qui définissent respectivement la conduite principale et les deux conduites de dérivation sont usinées de façon étagée, en utilisant des forets de diamètre différent, pour permettre l'assujettissement et le positionnement des éléments rapportés.

La culasse 1, représentée figure 2, comporte de manière similaire une conduite principale d'amenée d'huile (2) et deux conduites de dérivation coaxiales (3a,3b) qui partent de part et d'autre de la conduite principale (2). Chacune de ces conduites de dérivation est destinée à alimenter une pièce mobile distincte de la chaîne de distribution.

Suivant l'invention, la conduite principale est formée par un premier perçage (2) traversant de manière oblique la culasse et les deux conduites de dérivation sont obtenues par un second perçage droit (3), s'étendant verticalement, qui débouche dans le premier perçage, les deux perçages ayant leur axe sensiblement concourant. Au droit de l'intersection des deux perçages, le premier (2) présente une section supérieure au second (3).

Pour répartir l'huile, amenée par la conduite principale (2), dans chacune des deux conduites de dérivation (3a,3b), des moyens distributeurs sont logés dans la conduite principale au droit du départ des deux conduites de dérivation.

Ces moyens se composent simplement d'un corps oblong cylindrique (4), comportant un alésage borgne (5) s'étendant suivant l'axe longitudinal du corps (5), deux gorges annulaires périphériques distinctes (6,7) et deux conduits calibrés adaptés dirigés radialement (8,9) mettant en communication l'alésage 5 et les gorges (6,7).

Le corps (4) est logé à l'intérieur du premier perçage (5) en butée contre un épaulement de positionnement (2c), l'orifice de l'alésage (5) tourné vers l'arrivée d'huile, de façon que l'huile pénètre dans ce dernier.

Le diamètre du corps (4) est ajusté de manière à être monté serré à l'intérieur du perçage (2). De fait le corps (4) constitue un obturateur étanche de la conduite principale (2), empêchant le passage de l'huile au-delà de la zone de départ des conduites de dérivation en direction de l'extérieur.

Compte tenu de la différence de diamètre entre le premier perçage (2) et le second perçage (3) au droit de l'intersection, le corps 4 obture également le second perçage, isolant les deux conduites de dérivation (3a,3b).

L'alimentation en huile de lubrification des deux conduites de dérivation (3a,3b) est alors assurée par les seuls conduits calibrés (8,9) prolongés par les gorges (6,7). Le dimensionnement et le positionnement des conduits (8,9) et des gorges (6,7) sont adaptés à l'inclinaison relative des axes des deux perçages, de manière à mettre en communication chaque conduit avec une conduite de dérivation et une seule.

Les deux gorges annulaires (6,7) permettent de faire déboucher chaque conduit calibré (8,9) dans la conduite de dérivation associée (3a,3b) quelque soit l'orientation angulaire du corps (4) lors de son montage à l'intérieur du perçage (2).

Il suffit donc d'ajuster le calibrage du conduit alimentant chacune des gorges en fonction des besoins de la conduite de dérivation associée.

Ainsi le corps (4) opère la répartition de l'huile dans les deux conduites secondaires tout en obturant la conduite d'amenée principale. Il en résulte une très grande simplicité de montage grâce à une réduction des élément rapportés de un à trois.

Par ailleurs l'usinage des deux perçages (2,3) est simplifié par rapport à la culasse présentée figure 1, puisqu'il est nécessaire de réaliser en tout et pour tout qu'un seul épaulement.

Bien entendu, l'invention n'est nullement limitée au mode de réalisation décrit et illustré qui n'a été donné qu'à titre d'exemple.

## Revendications

1. Culasse pour moteur à combustion interne, comprenant un circuit d'huile sous pression pour la lubrification ou l'alimentation de pièces mobiles de la chaîne de distribution, ledit circuit comportant une conduite principale d'alimentation desservant au moins deux conduites de dérivation distinctes (3a,3b) et comprenant des moyens distributeurs (4) aptes à être logés au droit de l'intersection des deux perçages (2,3), lesdits moyens alimentant avec un débit d'huile prédéterminé chacune desdites conduites secondaires (3a,3b), caractérisée en ce que d'une part, ladite conduite principale étant formée par un premier perçage (2) et lesdites conduites de dérivation étant formées par un second perçage (3) intersectant ledit premier perçage de façon oblique et en ce que d'autre part, lesdits moyens distributeurs sont constitués par un corps (4), agencé de façon à pouvoir assurer une séparation sensiblement étanche entre lesdites conduites de dérivation (3a,3b) et comportant deux passages calibrés (8,9) destinés à déboucher chacun dans une conduite de dérivation associée (3a,3b), quelle que soit l'orientation angulaire dudit corps lors de son montage à l'intérieur dudit premier perçage (2).

2. Culasse pour moteur à combustion interne selon la revendication 1, caractérisée en ce que ledit corps (4) est logé à l'intérieur dudit premier perçage (2), monté serré de manière à étancher ladite conduite principale en direction de l'extérieur.

3. Culasse pour moteur à combustion interne selon l'une quelconque des revendications 1 à 2, caractérisée en ce que ledit corps (4) de forme cylindrique comporte un alésage longitudinal borgne (5), deux gorges périphériques (6,7) et deux conduits calibrés (8,9) dirigés radialement mettant en communication l'alésage (5) et les gorges (6,7).

## Claims

1. A cylinder head for an internal combustion engine, comprising a circuit for oil under pressure for lubricating or feeding movable members of the distribution train, said circuit comprising a main feed conduit supplying at least two separate branch conduits (3a, 3b) and comprising distributor means (4) capable of being accommodated in line with the intersection of the two drillings (2, 3), said means feeding each of said secondary conduits (3a, 3b) with a predetermined oil flow rate, characterised in that on the one hand said main conduit being formed by a first drilling (2) and said branch conduits being formed by a second drilling (3) inclinedly intersecting said first drilling and that on the other hand said distributor means are formed by a body (4) which is so arranged as to be able to ensure substantially sealing separation between said branch conduits (3a, 3b) and comprising two calibrated passages (8, 9) intended to open each into an associated branch conduit (3a, 3b), irrespective of the angular orientation of said body when it is fitted in the interior of said first drilling (2).

2. A cylinder head for an internal combustion engine according to claim 1 characterised in that said body (4) is accommodated in the interior of said first drilling (2), mounted in clamped relationship in such a way as to seal said main conduit in the direction of the exterior.

3. A cylinder head for an internal combustion engine according to either one of claims 1 and 2 characterised in that said body (4) of cylindrical shape comprises a blind longitudinal bore (5), two peripheral grooves (6, 7) and two radially directed calibrated conduits (8, 9) communicating the bore (5) and the grooves (6, 7).

## Patentansprüche

1. Zylinderkopf für Brennkraftmaschinen, mit einer Kanalisation für unter Druck stehendes Öl zur Schmierung oder Versorgung der durch die Steuerkette bewegten Teile, wobei die Kanalisation eine Hauptzufuhrleitung zur Versorgung wenigstens zweier getrennter Zweigleitungen (3a, 3b) aufweist und eine Verteilanordnung (4) aufweist, die am Schnittpunkt der beiden Bohrungen (2, 3) eingesetzt ist, so daß diese Anordnung jede der beiden zweiten Leitungen (3a, 3b) mit einer vorgegebenen Ölmenge versorgt, dadurch gekennzeichnet, daß einerseits die Hauptleitung aus einer ersten Bohrung (2) besteht und die Zweigleitungen aus einer zweiten Bohrung (3) bestehen, welche die erste Bohrung schräg schneiden und daß andererseits die Verteilanordnung aus einem Körper (4) besteht, der so ausgestaltet ist, daß er eine im wesentlichen dichte Trennung zwischen den Zweigleitungen (3a, 3b) gewährleistet, sowie zwei angepaßte Durchlässe (8, 9) aufweist, deren jeder in eine zugehörige Zweigleitung (3a, 3b) mündet, unabhängig von der Winkelausrichtung des Körpers während seines Einsetzens in das Innere der ersten Bohrung (2).

2. Zylinderkopf für Brennkraftmaschinen nach Anspruch 1, dadurch gekennzeichnet, daß der Körper (1) im Inneren der ersten Bohrung (2) eingesetzt ist und im Klemmsitz derartangeordnet ist, daß er die Hauptleitung nach außen hin abdichtet.

3. Zylinderkopf für Brennkraftmaschinen nach einem der Ansprüche 1 bis 2, dadurch gekennzeichnet, daß der zylindrische Körper (4) eine Sackbohrung (5) in Längsrichtung aufweist, sowie zwei Umfangsnuten (6, 7) und zwei radial gerichtete angepaßte Leitungen (8, 9) welche die Bohrung (5) mit den Nuten (6, 7) verbinden.
